# DEMANDE DE BREVET EUROPEEN

(11) **EP 3 815 970 A1**
(43) Date de publication de la demande: **05.05.2021**
(21) Numéro de dépôt: 19306426.8
(22) Date de dépôt: 04.11.2019
(51) Int. Cl.: B60P 3/22

(54) **VEHICULE HYDROCUREUR COMPORTANT UNE ARTICULATION DE CITERNE DE STOCKAGE AMELIOREE**

(71) Demandeur: Huwer Holding, 26100 Romans-sur-Isere (FR)
(72) Inventeur: AVICE, Jean-Michel, 72200 BAZOUGES-SUR-LE-LOIR (FR)
(74) Mandataire: Gauchet, Fabien Roland

(57) **Abrégé**

Le véhicule hydrocureur comporte un châssis porteur (2), une citerne de stockage (3) comprenant, selon un axe longitudinal, un fond de cuve (34), une virole (30) et un couvercle basculant (35), la citerne de stockage étant montée basculante sur le châssis porteur par l'intermédiaire d'une articulation (7), l'articulation étant fixée à la citerne de stockage par vissage ou boulonnage.

## Description

### DOMAINE TECHNIQUE DE L'INVENTION

L'invention concerne un véhicule hydrocureur comportant un châssis porteur et une citerne de stockage articulée sur le châssis porteur.

### ETAT DE LA TECHNIQUE ANTERIEURE

De manière classique, les véhicules hydrocureurs comprennent un châssis porteur, une citerne de stockage ainsi qu'une articulation entre la citerne de stockage et le châssis porteur. Cela permet de réaliser une opération de bennage afin de vider la citerne de stockage des boues de curage qui ont été collectées durant une ou plusieurs interventions de curage. L'articulation est habituellement soudée au niveau d'une extrémité arrière de la virole de la citerne de stockage, en particulier, sur une face externe de cette dernière. Par exemple, le document US 2011/0088289 illustre un tel assemblage d'une articulation sur la virole de la citerne de stockage d'un véhicule hydrocureur. Toutefois, la réalisation de la soudure entre l'articulation et la virole de la citerne de stockage est effectuée avec une tolérance de positionnement relativement importante qui peut conduire à un désaxement ou désalignement préjudiciable de la citerne de stockage par rapport au châssis porteur. Afin d'assurer un bon alignement entre la citerne de stockage et le châssis porteur, une installation complexe préalable à l'opération de soudage de l'articulation est nécessaire afin de minimiser les risques de désalignement.

### EXPOSE DE L'INVENTION

Un but de l'invention est de fournir un véhicule hydrocureur présentant une articulation d'une citerne de stockage par rapport à un châssis porteur qui soit simple à fixer tout en assurant un alignement entre la citerne de stockage et le châssis porteur lors d'un montage.

A cette fin, il est prévu, selon l'invention, un véhicule hydrocureur comportant un châssis porteur, une citerne de stockage comprenant, selon un axe longitudinal, un fond de cuve, une virole et un couvercle basculant, la citerne de stockage étant montée basculante sur le châssis porteur par l'intermédiaire d'une articulation, l'articulation étant fixée à la citerne de stockage par vissage ou boulonnage.

Avantageusement, mais facultativement, le véhicule hydrocureur selon l'invention présente au moins l'une des caractéristiques techniques suivantes :
- l'articulation comporte un bras de bennage comprenant une extrémité de montage fixé à la citerne de stockage par vissage ou boulonnage ;
- l'articulation comportant un axe de bennage monté à une autre extrémité du bras de bennage, l'axe de bennage étant monté sur le châssis porteur de sorte à ce que le bras de bennage soit monté mobile à basculement sur le châssis porteur ;
- l'articulation comporte une platine de liaison avec la citerne de stockage ;
- la citerne de stockage comprend une platine de fixation de l'articulation ;
- la citerne de stockage comporte une traverse fixée sur la virole, l'articulation étant fixée sur la traverse ;
- la platine de fixation est ménagée sur la traverse ;
- la citerne de stockage comporte un cerclage de renfort agencé au droit d'un point de montage de l'articulation sur la citerne de stockage ;
- le cerclage de renfort est réalisé à partir d'un profilé de type IPN ; et,
- l'articulation est positionnée sur la virole, au niveau d'une extrémité de la virole recevant le couvercle basculant.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est une vue tridimensionnelle d'un véhicule hydrocureur selon l'invention ;
- la figure 2 est une vue latérale illustrant le montage d'une citerne de stockage sur un châssis porteur du véhicule hydrocureur de la figure 1 ;
- la figure 3 est une vue partielle de dessous illustrant l'articulation montée sur la virole de la citerne de la figure 2 ;
- la figure 4 est une vue arrière partielle de l'articulation de la figure 3 ;
- la figure 5 est une vue tridimensionnelle de l'articulation des figures 3 et 4 ; et
- la figure 6 est une vue éclatée d'un des bras de l'articulation de la figure 5.

Pour plus de clarté, les éléments identiques ou similaires sont repérés par des signes de référence identiques sur l'ensemble des figures.

### DESCRIPTION DETAILLEE D'UN MODE DE REALISATION

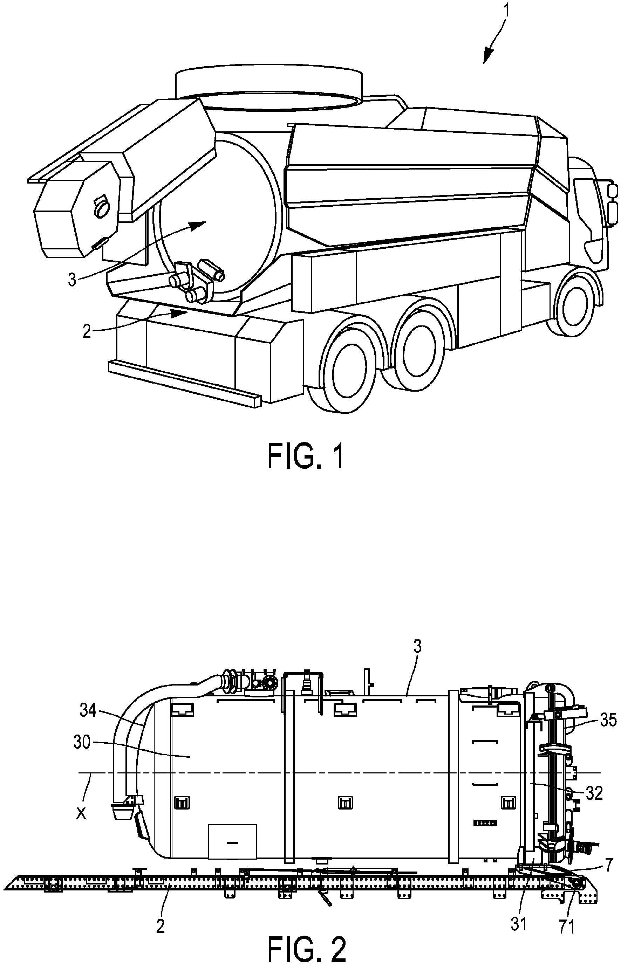

En référence à la figure 1, un véhicule hydrocureur 1 selon l'invention est ici un véhicule de type poids lourd comprenant un châssis porteur 2 sur lequel est montée une citerne de stockage 3.

En référence à la figure 2, la citerne de stockage 3 comporte, selon un axe longitudinal X horizontal sur la figure 2, en partant de l'avant du véhicule hydrocureur 1 qui se trouve sur la gauche de la figure 2 vers l'arrière du véhicule hydrocureur 1 qui se trouve sur la droite de la figure 2, un fond de cuve 34 suivi d'une virole 30 puis d'un couvercle basculant 35. La citerne de stockage 3 est montée basculante sur le châssis porteur 2 par l'intermédiaire d'une articulation 7. L'articulation 7 est fixée à la virole 30 de la citerne de stockage 3, au niveau d'une extrémité arrière de la virole 30 qui correspond à l'extrémité sur laquelle est monté le couvercle basculant 35.

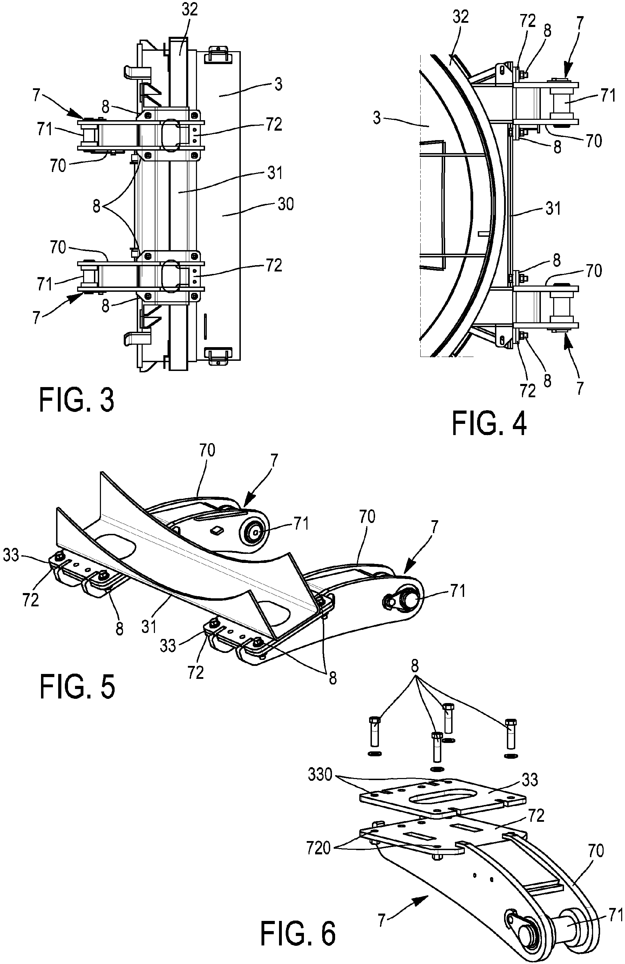

En référence aux figures 3 à 6, nous allons décrire plus en détail l'agencement de l'articulation 7, et d'un montage de cette dernière sur la citerne de stockage 3. L'articulation 7 comporte un bras de bennage 70, présentant une forme de banane en vue de côté. Une extrémité d'articulation du bras de bennage 70 comporte un axe de bennage 71. L'axe de bennage 71 est monté par ailleurs sur le châssis porteur 2 et participe donc à une liaison pivot entre le bras de bennage 70 et le châssis porteur 2 du véhicule hydrocureur 1 selon l'invention. Le bras de bennage 70 de l'articulation 7 est ainsi monté mobile à basculement sur ledit châssis porteur 2 du véhicule hydrocureur 1 selon l'invention. A une autre extrémité, dite de montage, du bras de bennage 70, le bras de bennage 70 comporte une platine de liaison 72, ici de forme rectangulaire, comportant une série d'orifices traversants 720. Dans le mode de réalisation illustré aux figures, la série d'orifices traversants 720 comprend quatre orifices traversants 720 répartis et disposés au niveau des quatre coins de la platine de liaison 72. La platine de liaison 72 forme l'extrémité de montage du bras de bennage 70 sur la citerne de stockage 3 du véhicule hydrocureur 1 selon l'invention.

Du côté de la citerne de stockage 3 du véhicule hydrocureur 1 selon l'invention, la virole 30 comporte une platine de fixation 33 qui est fixée sur une face externe de la virole 30. La platine 33 présente une forme complémentaire de la platine de liaison 72 précédemment décrite, et en particulier ici, la platine de fixation 33 est de forme rectangulaire et présente une série d'orifices traversants 330 situés au niveau des coins de la platine de fixation 33 agencés de sorte que lorsque la platine de fixation 33 vient en appui et en regard de la platine de liaison 72, la série d'orifices traversants 330 est au droit de la série d'orifices traversants 720 de la platine de liaison 72 du bras de bennage 70 de l'articulation 7.

D'autre part, la citerne de stockage 3 comporte une traverse 31 qui est fixée sur la face externe de la virole 30. Cette traverse 31 est généralement et communément soudée à la virole 30 de la citerne de stockage 3 de manière transversale perpendiculairement à l'axe longitudinal X de la citerne de stockage 3. La traverse 31 sert d'interface entre la virole 30 et la platine de fixation 33 qui est alors ménagée sur la traverse 31. De manière connue en soi, la platine de fixation 33 est rapportée par soudure sur la traverse 31. De sorte à renforcer la virole 30 au niveau de la liaison de ladite citerne de stockage 3 avec l'articulation 7, la citerne de stockage 3 comporte un cerclage de renfort 32 qui est alors agencé dans un plan transversal perpendiculaire à l'axe longitudinal X passant au niveau d'un point de montage de l'articulation 7 sur la citerne de stockage 3. Par exemple, ici, le cerclage de renfort 32 est réalisé à partir d'un profilé de type IPN. Par exemple, le profilé de type IPN présente en section une forme de « U » et est fixé par soudure sur la face externe de la virole 30 de sorte à ce qu'un fond du « U » s'étende en regard et à distance de la face externe de la virole 30, les extrémités des bras formant la section en « U » étant soudées sur la virole 30. La traverse 31 est alors positionnée de sorte à recouvrir le cerclage de renfort 32 comme cela est illustré sur les figures 3 et 4 par exemple.

Lors d'un assemblage de l'articulation 7 sur la citerne de stockage 3, dans le mode de réalisation ici illustré, un ensemble de boulons 8 est positionné à travers chacun des orifices traversants 330 de la platine de fixation 33 et des orifices traversants 720 de la platine de liaison 72 du bras de bennage 70. Ainsi, l'articulation 7 est alors boulonnée sur la citerne de stockage 3. Dans une variante de réalisation, les boulons 8 sont remplacés par des moyens de vissage et l'articulation 7 est alors vissée sur la citerne de stockage 3. Une telle structure et un tel assemblage de l'articulation 7 sur la citerne de stockage 3 sont simples à réaliser et permettent, grâce à un jeu de fabrication entre un diamètre des boulons 8 et un diamètre, d'une part, des orifices traversants 330 de la platine de fixation 33 et, d'autre part, des orifices traversants 720 de la platine de liaison 72, d'assurer un positionnement de manière rapide et très simple de la citerne de stockage 3 par rapport au châssis porteur 2, en particulier d'assurer un parfait alignement entre les deux une fois l'assemblage réalisé.

Bien entendu, il est possible d'apporter à l'invention de nombreuses modifications sans pour autant sortir du cadre de celle-ci.

## Revendications

1. Véhicule hydrocureur (1) comportant un châssis porteur (2), une citerne de stockage (3) comprenant, selon un axe longitudinal, un fond de cuve (34), une virole (30) et un couvercle basculant (35), la citerne de stockage étant montée basculante sur le châssis porteur par l'intermédiaire d'une articulation (7), **caractérisé en ce que** l'articulation est fixée à la citerne de stockage par vissage ou boulonnage.

2. Véhicule hydrocureur selon la revendication 1, **caractérisé en ce que** l'articulation comporte un bras de bennage (70) comprenant une extrémité de montage (72) fixé à la citerne de stockage par vissage ou boulonnage.

3. Véhicule hydrocureur selon la revendication 2, **caractérisé en ce que**, l'articulation comportant un axe de bennage (71) monté à une autre extrémité du bras de bennage, l'axe de bennage étant monté sur le châssis porteur de sorte à ce que le bras de bennage soit monté mobile à basculement sur le châssis porteur.

4. Véhicule hydrocureur selon l'une des revendications 1 à 3, **caractérisé en ce que** l'articulation comporte une platine de liaison (72) avec la citerne de stockage.

5. Véhicule hydrocureur selon l'une des revendications 1 à 4, **caractérisé en ce que** la citerne de stockage comprend une platine de fixation (33) de l'articulation.

6. Véhicule hydrocureur selon l'une des revendications 1 à 5, **caractérisé en ce que** la citerne de stockage comporte une traverse (31) fixée sur la virole, l'articulation étant fixée sur la traverse.

7. Véhicule hydrocureur selon les revendications 5 et 6, **caractérisé en ce que** la platine de fixation est ménagée sur la traverse.

8. Véhicule hydrocureur selon l'une des revendications 1 à 7, **caractérisé en ce que** la citerne de stockage comporte un cerclage de renfort (32) agencé au droit d'un point de montage de l'articulation sur la citerne de stockage.

9. Véhicule hydrocureur selon la revendication 8, **caractérisé en ce que** le cerclage de renfort est réalisé à partir d'un profilé de type IPN.

10. Véhicule hydrocureur selon l'une des revendications 1 à 9, **caractérisé en ce que** l'articulation est positionnée sur la virole, au niveau d'une extrémité de la virole recevant le couvercle basculant.
